# EUROPEAN PATENT SPECIFICATION

(11) **EP 2 304 831 B1**
(45) Date of publication and mention of the grant of the patent: **28.03.2012**
(21) Application number: 09757589.8
(22) Date of filing: 04.06.2009
(51) Int. Cl.: H01M 8/04, H01M 8/10

(54) **METHOD FOR FROST PROTECTION IN A DIRECT METHANOL FUEL CELL**
VERFAHREN ZUM FROSTSCHUTZ IN EINER DIREKTMETHANOL-BRENNSTOFFZELLE
MÉTHODE DE PROTECTION CONTRE LE GEL DANS UNE PILE À COMBUSTIBLE À MÉTHANOL DIRECT

(30) Priority: 04.06.2008 US 58617 P
(43) Date of publication of application: 06.04.2011
(73) Proprietor: IRD FUEL CELLS A/S, 5700 Svendborg (DK)
(72) Inventor: ODGAARD, Madeleine, DK-5230 Odense M (DK)
(74) Representative: Ainscow, Georgina Frances
(86) International application number: PCT/EP2009/056870
(87) International publication number: WO 2009/147208

(56) References cited:
- EP-A- 0 876 685
- DE-A1- 10 035 756
- US-A1- 2003 108 781
- US-A1- 2003 148 149
- US-A1- 2005 244 698

## Description

This patent application claims the benefit of priority from U.S. Provisional Application Serial No. 60/058,617, filed June 4, 2008.

### Field of the Invention

This invention relates to a method of reducing degradation of direct methanol fuel cell (DMFC) components at temperatures below room temperature and especially below the freezing point of fuel/water mixtures.

### Background of the Invention

In both stationary and portable power applications, fuel cell systems are required to operate for varying time periods and may be subjected to frequent start-up and shut down cycles.

After shut down, direct methanol fuel cells (DMFC) must be re-started in order to provide sufficient power for the application to be supplied with power. The power generated is provided for running any arbitrary electrical prime mover or other device that consumes electric power that is electrically connected to the power generating fuel cell. This configuration is termed the application.

At ambient temperatures above freezing, re-starting generally occurs without problems. However, lower temperatures slow down the re-activation process and when the ambient temperature falls below the freezing point of the methanol/water mixture in the DMFC, the re-starting process is complicated by the effects of phase change as well as being markedly more sluggish.

Repeated freezing and thawing of the water in the DMFC gradually degrades cell performance and efficiency of the DMFC (McDonald et al. Fuel Cells 2004 4(3) pp 208-213). It is therefore desirable to ensure that the aqueous liquid/fuel mixtures contained in the fuel cell remains liquid at temperatures below the freezing point of the mixture. Provisions must be made to prevent damage to the fuel-cell when the methanol and water mixture freezes.

When a fuel cell is dormant, methanol diffuses from the fuel stock adjacent to the anode to the cathode side and then reacts with residual oxygen. This reaction has been observed to damage and degrade the Membrane Electrode Assembly (MEA) resulting in deterioration of the fuel cell performance. Further, when restarting the DMFC from the dormant state, methanol and oxygen on the cathode side, in contact with the electrode catalyst, react and cause local overheating of the fuel cell with resulting degradation of the electrode assembly materials and deterioration of DMFC performance.

Several methods have been suggested for protection and start up of fuel cells at temperatures below 0°C. These include: adding a heater element from an external source to maintain temperatures above the freezing point; insulation; drainage of fluid to avoid ice formation by using an ancillary supply of inert gas; providing separated cooling/heating circuits; and promoting start up by preheating the fuel cell to a temperature above the freezing point of the standard methanol/water fuel mixture prior to replacing a suitable storage liquid, which substitutes methanol and water on shut-down, with the fuel mixture.

However, active heating expends energy which is considered as a net loss of output and reduces efficiency. Further, many of these solutions increase the complexity of operation and the complexity of the system components. They increase installation cost and/or they require an energy supply provided from an external source.

U.S. Patent 6,440,595 discloses a fuel cell system comprising a fuel cell which includes a feed line for a fuel and a feed line for an oxidant. To ensure adequate moistening of the fuel cell membrane even during the start-up phase of the fuel cell, a fluid reservoir containing a fluid is provided, via which the fuel and/or the oxidant are humidified before entering the fuel cell. Thus, adequate moistening of the fuel cell membrane is ensured even during the start-up phase of the fuel cell. To prevent the fluid from freezing at low temperatures, the fluid is mixed with an antifreeze. To ensure that the antifreeze will not pass into the fuel cell, the fluid drawn from the fluid reservoir is heated sufficiently by a heating means for evaporation of the antifreeze and separation from the fluid to take place.

U.S. Patent 6,905,791 discloses a method and apparatus for the operation of a fuel cell system to avoid the freezing of water residing in one or more fuel cells during periods of system inactivity wherein a chemical compound is introduced into the fuel cell system to mix with the water still resident within the fuel cell thereby lowering the temperature upon which the onset of water freezing occurs. The system is configured such that the chemical compound can be introduced at numerous different locations. The chemical compound is taught to be in a liquid state at the normal freezing temperature of the reaction product (which in the case of water is approximately 0°C (32°F)) but in a gaseous state at temperatures corresponding to the fuel cell system when the system is at its normal operating condition. The chemical compound is preferably miscible in water, and has a boiling point in the range between approximately 20°C (68°F), and approximately 80°C (176°F), with a freezing point below approximately -40°C (-40°F). Compounds especially adapted for use in this fuel cell system are taught to include alcohols (such as methanol), bases, acids, sugars with at least one functional group and one to twenty carbon atoms, and compounds including hydrogen and at least one carbon and nitrogen. The chemical compound should also be able to be catalytically broken down in the fuel cell and the product generated burned in a combustor and vented to the atmosphere. The chemical compound can be introduced alone under pressure in the vapor phase, or in combination with the fuel, the incoming oxygen or an inert gas.

### Summary of the Invention

An aspect of the present invention relates to methods and systems for adding to a fuel cell system a freezing point depressant that is compatible with fuel cell material components and that does not deleteriously affect electrode processes of the fuel cell system.

Another aspect of the present invention relates to methods and system which utilize an inert gas, preferably carbon dioxide already present in the system as a reaction product generated upon the oxidation of methanol, to flush the fuel cell system during fuel-cell-shut-down.

### Brief Description of the Drawings

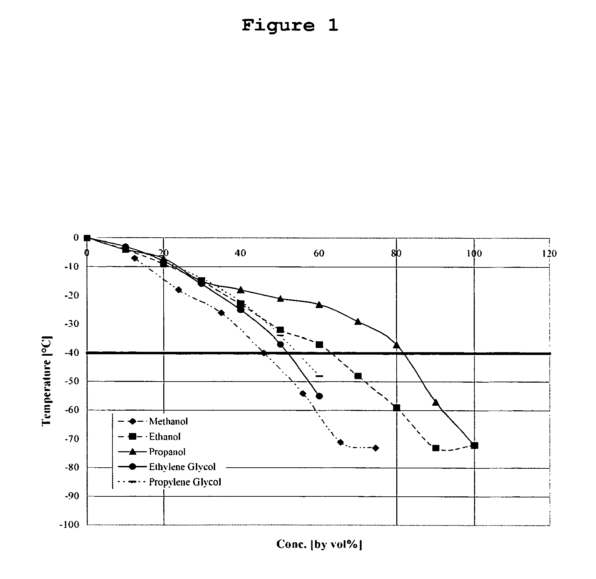

Figure 1 is a line graph showing freezing curves for various mixtures of water and exemplary freezing point depressants. Figure 1 shows the volume percentage needed for the exemplary freezing point depressants to provide frost protection down to -40°C.

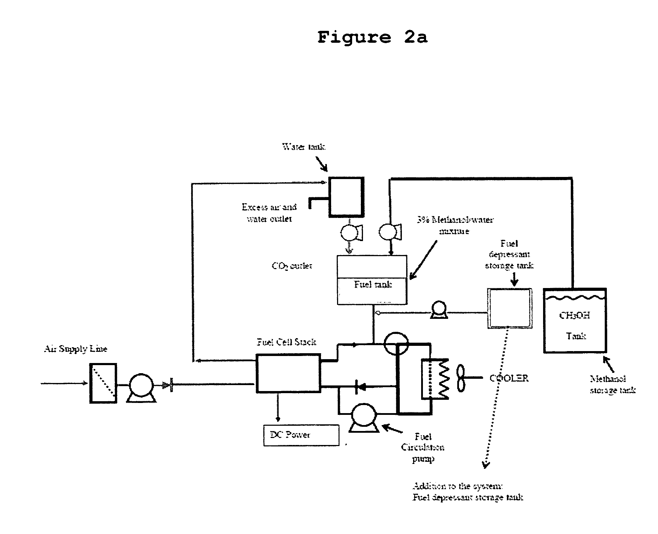

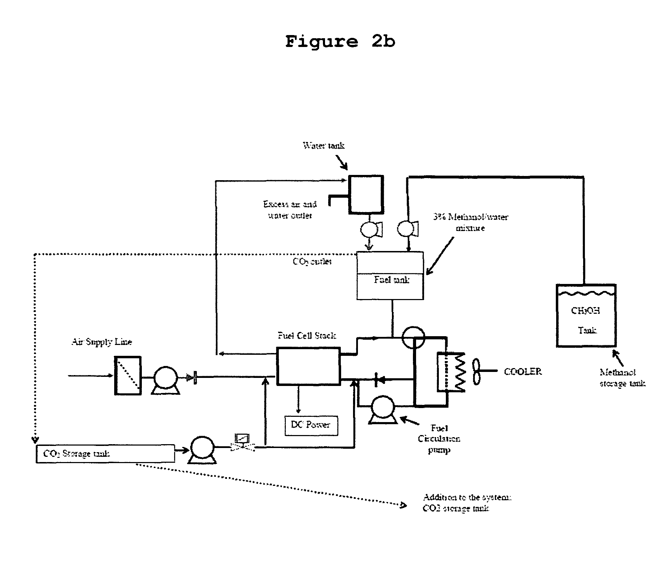

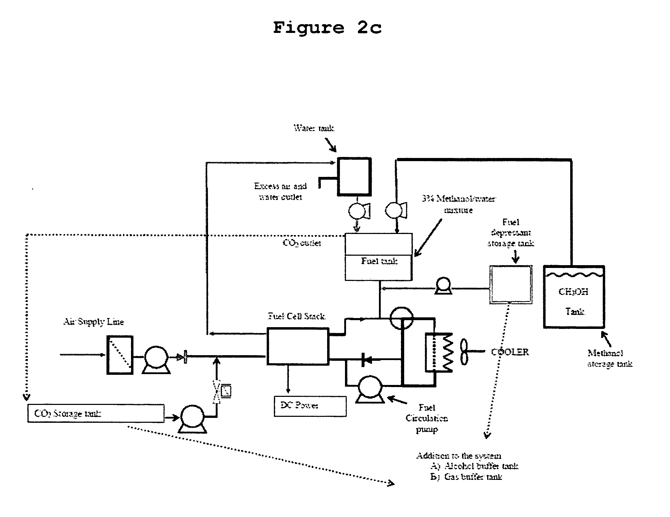

Figure 2a through 2c are diagrams of an exemplary fuel cell system of the present invention with a freezing point depressant tank and/or an inert gas tank. Figure 2a shows an exemplary fuel cell system with a freezing point depressant tank. Figure 2b shows an exemplary fuel cell system with an inert gas tank. Figure 2c shows an exemplary fuel cell system with a freezing point depressant tank and an inert gas tank.

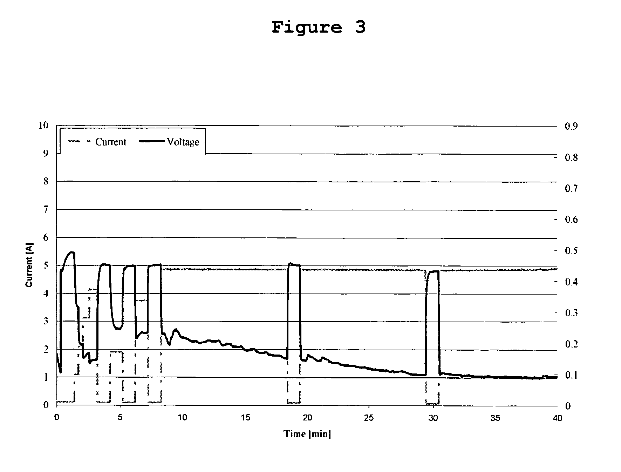

Figure 3 is a line graph showing the development of current and voltage of a DMFC, which has been stored at -30°C filled with a 50 vol% propylene glycol/water mixture. As shown, after initial activation, it is possible to draw current after only 8 minutes and a stable voltage is obtained after approximately 30 minutes

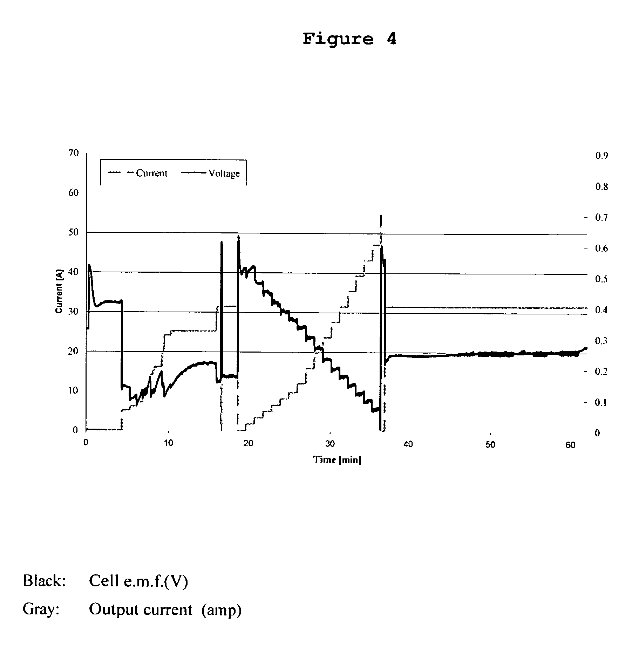

Figure 4 is a line graph showing the development of current and voltage of a DMFC, which has been stored at -20°C filled with a 50 vol% ethanol/water solution. As shown, nominal performance is obtained within 20 minutes after initiation.

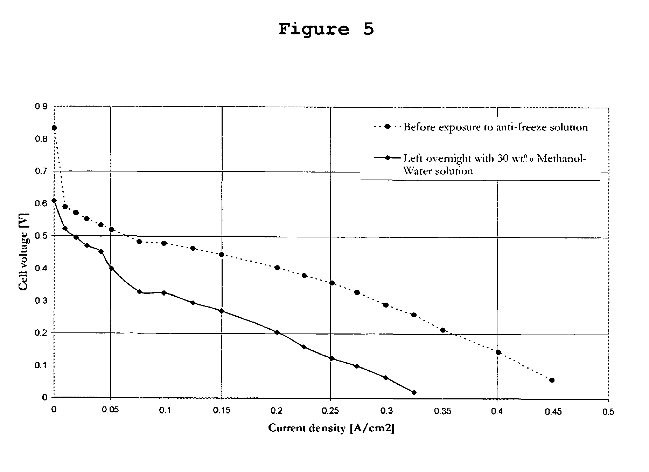

Figure 5 is a line graph showing the development of current and voltage of a DMFC which has been stored overnight with a 30 vol% methanol/water mixture at -20°C. The fuel cell was stored and started up without controlling the amount of oxygen present in the DMFC leading to degradation of the membrane electrode assembly.

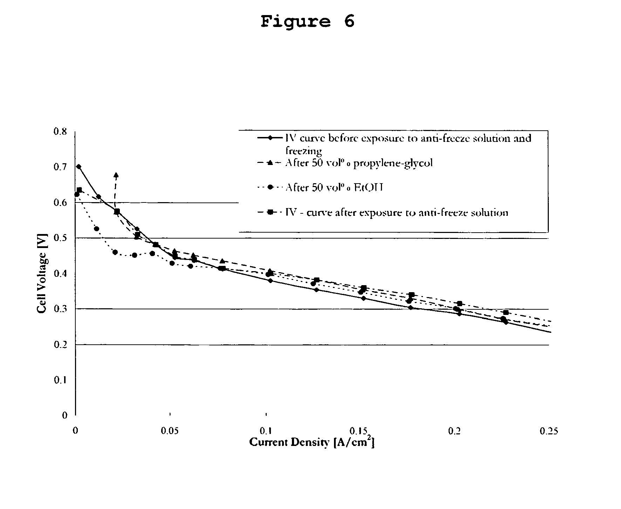

Figure 6 shows the development of current and voltage of a DMFC, which has been stored at -18°C with a 50 vol% ethanol/water mixture and a 50 vol% propylene glycol/water mixture. Oxygen was removed by flushing using an inert gas. The figure shows the current/voltage curve obtained before and after storage. No degradation is observed.

### Detailed Description of the Invention

The present invention provides fuel cell deactivation processes that leave the direct methanol fuel cell (DMFC) in a non-reactive state during dormant periods and provides for carefully controlled re-activation of the dormant cell without adding complexity and without lowering efficiency of the fuel cell.

In one embodiment of the present invention, a freezing point depressant (FPD) is added to the fuel cell system prior to deactivation. An apparent and obvious choice of a freezing point depressant to be added to the fuel cell is methanol. However, methanol diffuses very quickly in the proton exchange membrane (PEM) where it oxidizes at the cathode and can participate in undesirable side-reactions or electrolysis leading to irreversible membrane electrode degradation. Accordingly, in the present invention, freezing point depressants (FPDs) are selected which exhibit a significant reduction in diffusion through the PEM by a factor of 10 or more as compared to methanol. Thus, the FPDs selected for use in the present invention comprise compatible molecules that are substantially heavier and larger than methanol, not degraded on contact with oxygen or air in the fuel cell and at the same time are electrochemically active so that these molecules can be used to re-activate the cell. Examples of FPDs for use in the present invention include, but are not limited to, alcohols such as ethanol, propanol, butanol, pentanol, hexanol, heptanol and octanol including any normal, branched aliphatic or cyclic structural isomers, and mixtures of these, which diffuse at a slower rate through the PEM to the cathode side than methanol due to the reduction in diffusion rates for these larger molecules. Also useful as freezing point depressants are liquid glycols with a carbon content greater than two carbon atoms in the molecule such as, but not limited to, ethanediol, propandiol, butandiol, pentandiol, hexandiol, heptandiol and octandiol, including any normal, branched aliphatic or cyclic structural isomers, or mixtures thereof. An anti-freeze mixture that has a water/alcohol ratio, or a water/glycol ratio that ensures that the mixture remains liquid at temperatures in the range +80°C to -40°C and prevents freezing of the solution at temperatures in the range 0 to -50°C is preferred. The concentration of alcohol or glycol is in the range of from 5 to 75 vol%.

Figure 1 shows the freezing curves for various mixtures of water and alcohols and of water and glycols. Shown therein is the temperature at which the mixture changes phase from a liquid to a solid/liquid mixture. While a 40 to 50% by weight composition of methanol/water mixture freezes at a lower temperature than any of the other compositions and offers the best protection from freezing, under normal operational conditions the methanol content in the methanol/water fuel mixture is approximately 1 molar (about 3% by weight). The higher methanol concentration needed to prevent freezing at -35°C strongly promotes methanol cross over by diffusion and thus increases degradation of the fuel cell materials significantly. As shown in Figure 1, the freezing points of the other compositions are comparable to the water-methanol mixtures and can protect the fuel cell from freezing in a comparable temperature range. Since the alternative molecules are larger, they will diffuse through the membrane at a slower rate, and thus will not be present on the oxidation side in concentrations comparable to the corresponding methanol concentration should methanol be present instead of the alternative freezing point depressants. Thus, the FPDs are expected to cause less damage to the fuel cell. Further, the reactive part of the alcohol is the hydroxyl group (OH) which comprises a smaller amount relative to the remnant carbon chain in the higher alcohols compared to methanol. Since unwanted side reactions primarily involve the OH-group, oxygen and the catalyst, the amount of side reaction is reduced by substituting methanol with a higher alcohol. Accordingly, alcoholic side reactions at the cathode are expected to occur at lower rates because of the effects of molecular structure on the rate of diffusion through the polymer membrane and because the relative activity of the unwanted side reaction processes are reduced as the effective availability of OH groups is correspondingly reduced in a heavier molecule. Glycols, which have multiple OH-groups which enhance their freezing point depressant properties compared to mono-functional alcohols, can also be used as FPDs.

In an alternative embodiment of the present invention, undesired side reactions at the cathode are limited by replacement of residual oxygen in the fuel cell prior to shutting down with an inert gas such as, but not limited to nitrogen or carbon dioxide gas. Inert gases nitrogen and carbon dioxide are non-reactive with alcohol and catalyst, and any deleterious reaction will not occur at the cathode during dormancy when oxygen is replaced by any of these inactive gases singly or in a mixture. The inert gas can be obtained from an external supply. However, preferred is that carbon dioxide gas generated during cell operation be used as the inert flushing gas. Carbon dioxide is a preferred gas for this purpose, since it is produced during operation of the fuel cell and can easily be extracted and stored in a CO₂ buffer tank obviating the need for external supply and logistics.

Figure 2 provides diagrams of exemplary fuel cell systems modified to provide for addition of a freezing point depressant and/or for flushing of the system with an inert gas. Figure 2a shows a fuel cell system modified to add a freezing point depressant. Figure 2b shows a fuel cell system modified to flush the system with an inert gas.

Figure 2c shows a fuel cell system modified to add a freezing point depressant and to flush the system with an inert gas. As shown in Figures 2a-2c, this modified fuel cell system comprises a fuel cell stack **2**, which is supplied with a liquid methanol/water mixture (typically 3 vol.-% methanol) on the anode side **3**, and air on the cathode side **4.** The liquid fuel is circulated by means of a circulation pump **5**, and the partially depleted methanol/water mixture is returned to the storage tank **6**. Water and methanol is taken from two storage tanks, and mixed in the proper ratio in order to yield the concentration of methanol used in fuel cell operation. In addition, as shown in Figures 2a and 2c, the fuel cell system may comprise a freezing point depressant storage tank **7** which supplies the fuel cell with a freezing point depressant during shut-down. The inert gas carbon dioxide, a by-product of the reaction of methanol and water in the fuel cell, is separated from the liquid fuel, and in the exemplary embodiment depicted in Figure 2b and 2c is stored in a CO₂ storage tank **8** for later use as an inert flushing gas during fuel-cell shut-down. The CO₂ necessary is readily available without the need for replenishment from an external supply as after use the storage can readily be refilled with the CO₂ generated during operation of the fuel-cell while excess CO₂ can be released to the atmosphere. An alternative inert gas to be used is nitrogen.

In accordance with the present invention a procedure for shutting down, storing and restarting of a modified fuel cell is as follows:

The electrical load on the DMFC is released, bringing the DMFC to the open circuit state. This step is a conditional requirement for shutting down the fuel cell.
As a second step, the feeding of methanol fuel to the DMFC is interrupted. As methanol is capable of diffusing through the polymer electrolyte membrane to the cathode side of the MEA, it is good practice to lower the methanol concentration at the electrode. Subsequently, as a third step, an aqueous solution of a freezing point depressant, such as a higher alcohol or glycol, is fed into the liquid fuel compartment and allowed to diffuse through the MEA and replace the methanol.

At this point, the DMFC is in a shut down state consuming no energy. Degrading side-reactions have been eliminated and the fuel cell can be maintained for protracted periods without noticeable degradation of the electrode and electrolyte components.

A further advantage of shutting the fuel cell down in accordance with the present invention is that during start-up of the DMFC any freezing point depressants can be consumed by the power generating process and not by unwanted side reaction upon re-starting whereupon the inert flushing gas is steadily replaced by air and the DMFC is subjected to a small electrical load. Heat is generated during the start-up of the DMFC. Since the power generating reaction involving the higher alcohols is generally slower than that of methanol, heating occurs more slowly thus giving time for more uniform heat distribution through the entire DMFC thereby reducing the risk of forming hot spots with ensuing damage. Further, by-products of the higher alcohols such as aldehydes and ketones can be removed by the air stream passing the cathode during start-up. These products may be further finally oxidized to the corresponding water-soluble acids and removed as entrained aqueous solutions. The amounts of these by-products are limited and have no significant influence on the DMFC performance. The use of a glycol containing two OH-groups as the freezing point depressants produces residual oxidation products having a lighter mass and which are even more volatile, thus enhancing removal in the air stream.

On restarting a small electrical load is applied to the fuel cell to initiate the power generating reaction between air and alcohol or glycol and heating of the fuel cell. The fuel cell is then either actively or passively warmed to a temperature above the freezing point of the liquid methanol/water fuel mixture in which the fuel cell can operate. The alcohol or glycol solution is replaced by the normal methanol/water fuel solution, the inert gas is replaced with air, and the power consumption can progress to the output level desired.

An alternative procedure for shutting down and starting the DMFC after storage at temperatures below 0°C comprises: releasing the electrical load on the DMFC; stopping the airflow; flushing the cathode side with inert gas until the voltage is stabilized and nearly zero; flushing and/or filling the anode with a freeze point depressant; storing the fuel cell at -18°C for at least 12 hours at which point the fuel cell can be raised to room temperature; raising the fuel cell temperature to 18-22°C; and circulating fuel (3% methanol/water mixture) and low airflow through the cell and as soon as possible putting on a small load.

The following non-limiting examples are provided to further illustrate the present invention.

### EXAMPLES

Unless otherwise specified a conventional DFMC, such as described in U.S. Patent 6,800,391, teachings of which are herein incorporated by reference, and comprised of a single fuel cell was used in the following examples. Each fuel cell included an electrode with an active area of 156 cm². The anode catalyst layer was platinum/ruthenium (Pt/Ru) alloy, and the cathode catalyst layer was platinum (Pt). A DuPont Nafion® layer was used as the proton conductive membrane and electron conductive carbon cloth was used as diffusion layers for both the anode and cathode. Conductive carbon plates with multiple flow channels were used as the current collecting plates for the anode flow field plate and cathode flow field plate. A methanol fuel solution feed rate was capable of variation in the range 1-40 ml per minute and a variable dry air feed rate capable of variation in the range of 0-2.5 liter /minute was provided.

### Example 1

The fuel cell was stored at -3°C after flushing the cathode with an inert gas and filling the anode side of the fuel cell with a 10% ethanol/water mixture. After allowing the fuel cell to warm to ambient room temperature, and filling the fuel cell with 3% methanol/water fuel, and rejecting the initial effluent of 3% methanol/water fuel, a gradually increasing electrical load was extracted. The current-voltage response as function of time is shown in Figure 3. As shown therein, initially, the current and voltage response was somewhat erratic. However, the fuel cell reached both a constant current and a constant voltage after 8 minutes and was stable after 30 minutes, thus demonstrating that the cell is capable of being stored without damaging electrode materials and the MEA.

### Example 2

The fuel cell was stored at -20°C after flushing the cathode with an inert gas and filling the anode side of the fuel cell with a 10% ethanol/water mixture. After allowing the fuel cell to warm to ambient room temperature, and filling the fuel cell with 3% methanol/water fuel, and rejecting the initial effluent of 3% methanol/water fuel, a gradually increasing electrical load was extracted. The current-voltage response as function of time is shown in Figure 4. As shown therein, initially the current and voltage response were somewhat unstable and similar to Example 1. However, the fuel cell reached stability and provided constant current and constant voltage after 7 minutes. Subsequently, the load was increased up in steps to the maximum load. After 40 minutes the cell clearly was able to maintain cell voltage output in continuous operation. Thus, the fuel cell was shown to be capable of storage below the freezing point of the normal methanol/water without damage to the membrane electrode assembly materials and the electrodes.

### Example 3

The fuel cell was flushed with nitrogen as an inert gas and filled with at 50% propylene glycol mixture and subsequently stored at -30°C.After warming to room temperature 50% propylene glycol mixture and filling the fuel cell with 3% methanol/water fuel, a gradually increasing electrical load was applied. The current-voltage response as function of time is shown in Figure 5. Although an initially unstable current and voltage response is shown, the fuel cell reached both a constant current and a constant voltage after 30 minutes and maintained output voltage at full power. Thus, as shown the fuel cell can be stored and re-activated without damage to the MEA materials and the electrodes.

## Claims

1. A fuel cell system comprising a fuel cell stack supplied with a liquid methanol/water fuel mixture on the anode side and air on the cathode side, a methanol storage tank, a water storage tank, a circulation pump for circulating the liquid methanol/water fuel mixture from the methanol and water storage tanks through the fuel cell stack and the partially depleted methanol/water mixture to a storage tank, and a freezing point depressant storage tank which supplies the fuel cell stack with a freezing point depressant during shut-down, wherein said freezing point depressant exhibits a reduction in diffusion through a proton exchange membrane by a factor of 10 or more as compared to methanol.

2. A method for frost protecting a fuel cell system during shut-down comprising:
releasing the electrical load on a direct methanol fuel cell (DMFC) and bringing the DMFC to an open circuit state;
interrupting the feeding of methanol fuel to a liquid fuel compartment of a DMFC; and
replacing any methanol in the DMFC with a freezing point depressant which exhibits a reduction in diffusion through a proton exchange membrane by a factor of 10 or more as compared to methanol.

3. The fuel cell system of claim 1 or method of claim 2 wherein the freezing point depressant comprises an alcohol which diffuses at a slower rate through a proton exchange membrane than methanol.

4. The fuel cell system or method of claim 3 wherein the alcohol is a normal, branched aliphatic or cyclic structural isomer of ethanol, propanol, butanol, pentanol, hexanol, heptanol or octanol, or a mixture thereof.

5. The fuel cell system of claim 1 or method of claim 2 wherein the freezing point depressant comprises a liquid glycol with a carbon content greater than two carbon atoms in the molecule.

6. The fuel cell system or method of claim 5 wherein the glycol is a normal, branched aliphatic or cyclic structural isomer of propandiol, butandiol, pentandiol, hexandiol, heptandiol or octandiol, or a mixture thereof.

7. The fuel cell system of claim 1 or method of claim 2 wherein the freezing point depressant is ethanediol.

8. The fuel cell system of claim 1 or method of claim 2 wherein the freezing point depressant comprises an anti-freeze mixture that has a water/alcohol ratio, or a water/glycol ratio that ensures that the mixture remains liquid at temperatures in the range +80°C to -40°C and prevents freezing of the solution at temperatures in the range 0 to -50°C.

9. A fuel cell system of claim 1 which further comprises an inert gas storage tank containing an inert gas which flushes the fuel cell stack with the inert gas during shut-down.

10. A method of claim 2 which further comprises flushing the fuel cell system with an inert gas which does not react with methanol in the fuel cell.

11. The fuel cell system of claim 9 or method of claim 10 wherein the inert gas is selected from nitrogen or carbon dioxide produced by the fuel cell chemical reaction.

12. The fuel cell system or method of claim 11 wherein the inert gas is carbon dioxide separated as a by-product from liquid fuel of the fuel cell during operation of the fuel cell system.

## Patentansprüche

1. Ein Brennstoffzellensystem bestehend aus einem Brennstoffzellenblock, der auf der Anodenseite mit einer Flüssig-Methanol-/Wassermischung und auf der Kathodenseite mit Luft versorgt wird, einem Methanolspeichertank, einem Wasserspeichertank, einer Umlaufpumpe, um die Flüssig-Methanol-/Wassermischung von den Methanol- und Wasserspeichertanks durch den Brennstoffzellenblock und die teilweise verbrauchte Methanol/Wassermischung zu einem Speichertank zu bringen, und einem Speichertank für ein Gefrierpunktemiedrigungsmittel, der den Brennstoffzellenblock mit Gefrierpunkterniedrigungsmittel versorgt, wenn dieser außer Betrieb ist, wobei das genannte Gefrierpunkterniedrigungsmittel durch eine Protonaustauschmembran eine Diffusionsreduktion um einen Faktor von 10 mehr im Vergleich zu Methanol aufweist.

2. Ein Verfahren zum Frostschutz eines Brennstoffzellensystems, wenn dieses außer Betrieb ist, bestehend aus:
Freisetzen der elektrischen Last auf eine Direktmethanolbrennstoffzelle (DMFC) und Versetzen der DMFC in einen offenen Kreislauf;
Unterbrechen der Zufuhr von Methanolbrennstoff zu einer Flüssigbrennstoffzelle einer DMFC; und
Ersetzen von Methanol in der DMFC durch ein Gefrierpunktemiedrigungsmittel, das durch eine Protonaustauschmembran eine Diffusionsreduktion um einen Faktor von 10 mehr im Vergleich zu Methanol aufweist.

3. Das Brennstoffzellensystem entsprechend Anspruch 1 oder dem Verfahren von Anspruch 2, wobei das Gefrierpunkterniedrigungsmittel aus einem Alkohol besteht, der durch eine Protonaustauschmembran langsamer als Methanol diffundiert.

4. Das Brennstoffzellensystem oder das Verfahren entsprechend Anspruch 3, wobei es sich bei dem Alkohol um ein normales, verzweigt aliphatisches oder zyklisch strukturiertes isomer von Ethanol, Propanol, Butanol, Pentanol, Hexanol, Heptanol oder Octanol oder eine Mischung dieser handelt.

5. Das Brennstoffzellensystem entsprechend Anspruch 1 oder Verfahren von Anspruch 2, wobei das Gefrierpunktsemiedrigungsmittel aus einem flüssigen Glycol mit einem Kohlenstoffgehalt von mehr als zwei Kohlenstoffatomen im Molekül besteht.

6. Das Brennstoffzellensystem oder das Verfahren entsprechend Anspruch 5, wobei es sich bei dem Glycol um ein normales, verzweigt aliphatisches oder zyklisch strukturiertes Isomer von Propandiol, Butandiol, Pentandiol, Hexandiol, Heptandiol oder Octandiol oder eine Mischung dieser handelt.

7. Das Brennstoffzellensystem entsprechend Anspruch 1 oder dem Verfahren von Anspruch 2, wobei es sich beim Gefrierpunkterniedrigungsmittel um Ethandiol handelt.

8. Das Brennstoffzellensystem entsprechend Anspruch 1 oder dem Verfahren von Anspruch 2, wobei das Gefrierpunkterniedrigungsmittel aus einer Frostsrhutzmittelmischung mit einem Wasser-/Alkoholverhältnis oder Wasser-/Glycolverhältnis besteht, das gewährleistet, dass die Mischung im Temperaturbereich von +80°C bis -40°C flüssig bleibt und das Gefrieren der Lösung bei Temperaturen im Bereich von 0°C bis -50°C verhindert.

9. Ein Brennstoffzellensystem entsprechend Anspruch 1, zudem weiterhin ein Inertgasspeichertank gehört, der ein Inertgas enthält, welches den Brennstoffzellenblock während des Abschaltens mit dem Inertgas durchspült.

10. Ein Verfahren entsprechend Anspruch 2, bei dem zudem das Brennstoffzellensystem mit einem Inertgas durchgespült wird, das mit dem Methanol in der Brennstoffzelle nicht reagiert.

11. Das Brennstoffzellensystem entsprechend Anspruch 9 oder das Verfahren von Anspruch 10, wobei das Inertgas von Stickstoff oder Kohlenstoff, die durch die chemische Reaktion der Brennstoffzelle erzeugt werden, gewählt wird.

12. Das Brennstoffzellensystem oder Verfahren entsprechend Anspruch 11, wobei das Inertgas Kohlendioxid ist, das vom Flüssigbrennstoff der Brennstoffzelle während des Betriebs des Brennstoffzellensystems als Nebenprodukt abgeschieden wird.

## Revendications

1. Système de pile à combustible comprenant un bloc de pile à combustible alimenté en mélange combustible méthanol liquide/eau sur le côté anode et en air sur le côté cathode, un réservoir de stockage de méthanol, un réservoir de stockage d'eau, une pompe de circulation pour faire circuler le mélange combustible méthanol liquide/eau des réservoirs de stockage de méthanol et d'eau à travers le bloc de pile à combustible et pour refouler le mélange méthanol/eau appauvri à un réservoir de stockage, et un réservoir de stockage de dépresseur du point de congélation pour alimenter le bloc de pile à combustible en dépresseur du point de congélation pendant la mise à l'arrêt, dans lequel ledit dépresseur du point de congélation présentant une réduction de la diffusion à travers une membrane d'échange de protons dont le facteur est égal ou supérieur à 10 comparé au méthanol.

2. Procédé pour protéger contre le gel un système de pile à combustible pendant la mise à l'arrêt comprenant :
l'application d'une charge électrique à une pile à combustible à méthanol direct (DMFC) (acronyme de l'appellation anglaise Direct-Methanol Fuel Cell) et la mise de la pile à combustible DMFC dans un état de circuit ouvert ;
la coupure de l'alimentation de méthanol combustible à un compartiment de combustible liquide d'une pile DMFC ; et
la substitution de tout méthanol présent dans la pile à combustible DMFC par un dépresseur du point de congélation présentant une réduction de la diffusion à travers une membrane d'échange de protons dont le facteur est égal ou supérieur à 10 comparé au méthanol.

3. Système de pile à combustible selon la revendication 1 ou procédé selon la revendication 2, dans lequel le dépresseur du point de congélation comprend un alcool dont la diffusion à travers une membrane d'échange de protons présente un taux plus lent que le celui du méthanol.

4. Système de pile à combustible ou procédé selon la revendication 3, dans lequel l'alcool est un isomère aliphatique ramifié ou à structure cyclique normal d'éthanol, propanol, butanol, pentanol, hexanol, heptanol ou octanol, ou d'un mélange de ceux-ci,

5. Système de pile à combustible selon la revendication 1 ou procédé selon la revendication 2, dans lequel le dépresseur du point de congélation comprend un glycol liquide présentant un contenu en carbone supérieur à deux atomes de carbone dans la molécule.

6. Système de pile à combustible ou procédé selon la revendication 5, dans lequel le glycol est un isomère aliphatique ramifié ou à structure cyclique normal de propanediol, butanediol, pentanediol, hexanediol, heptanediol ou octanediol, ou d'un mélange de ceux-ci.

7. Système de pile à combustible selon la revendication 1 ou procédé selon la revendication 2, dans lequel le dépresseur du point de congélation est l'éthanediol.

8. Système de pile à combustible selon la revendication 1 ou procédé selon la revendication 2, dans lequel le dépresseur du point de congélation comprend un mélange antigel présentant un rapport eau/alcool ou un rapport eau/glycol qui garantit que le mélange restera liquide à des températures comprises dans une fourchette de +80° C à -40° C et qui empêchera le gel de la solution à des températures comprises dans une fourchette de 0 à -50° C.

9. Système de pile à combustible selon la revendication 1, comprenant en outre un réservoir de stockage de gaz inerte qui contient un gaz Inerte permettant le rinçage au gaz inerte du bloc de pile à combustible lors de la mise l'arrêt.

10. Procédé selon la revendication 2, comprenant en outre le rinçage du système de pile à combustible avec un gaz inerte qui ne réagit pas au méthanol dans la pile à combustible.

11. Système de pile à combustible selon la revendication 9 ou procédé selon la revendication 10, dans lequel le gaz inerte utilisé est choisi entre le dioxyde d'azote et le dioxyde de carbone produits par la réaction chimique dans la pile à combustible.

12. Système de pile à combustible ou procédé selon la revendication 11, dans lequel le gaz inerte est le dioxyde de carbone séparé sous forme de sous-produit du combustible liquide de la pile à combustible pendant le fonctionnement du système de pile à combustible.
